# EUROPEAN PATENT SPECIFICATION

(11) **EP 3 047 965 B1**
(45) Date of publication and mention of the grant of the patent: **02.08.2017**
(21) Application number: 16152175.2
(22) Date of filing: 21.01.2016
(51) Int. Cl.: B31D 3/00, B32B 7/04, B32B 7/12, B32B 27/06, B32B 27/16, B32B 27/30, B32B 5/32, B31D 1/02, B31D 5/00, B32B 5/18

(54) **ADHESIVE UNIT FOR DECORATION AND PROTECTION FROM WEAR AND PRODUCTION METHOD THEREOF**
KLEBSTOFFEINHEIT ZUR DEKORATION UND ZUM SCHUTZ VOR VERSCHLEISS UND HERSTELLUNGSVERFAHREN DAFÜR
UNITÉ ADHÉSIVE POUR DÉCORATION ET PROTECTION CONTRE L'USURE ET SON PROCÉDÉ DE PRODUCTION

(30) Priority: 21.01.2015 IT MI20150051
(43) Date of publication of application: 27.07.2016
(73) Proprietor: Somaschini, Giovanni Luca, 26867 Somaglia (LO) (IT)
(72) Inventor: Somaschini, Giovanni Luca, 26867 Somaglia (LO) (IT)
(74) Representative: Lunati & Mazzoni S.r.L.

(56) References cited:
- WO-A1-95/06691
- WO-A1-2014/188271
- CA-A- 1 173 877
- US-A1- 2004 216 949

## Description

The present invention relates to an adhesive unit for decoration and protection from wear and production method thereof, of the type specified in the preamble of the independent claims.

As is known, the use of adhesive units for decoration and protection, also known as labels, adhesive labels, adhesive decorations and stickers, is widespread.

These are of different shapes, sizes, colours, have different designs, illustrated themes and figures and are used to decorate, customise and enliven - and also to protect from wear, scratches, fouling and the like - walls, panels, doors, windows, shop windows, appliances, vehicle parts, etc.

In particular, those adhesive units having a certain thickness and in any case not flat like a sheet are of superior quality and very widespread.

These adhesive units for decoration or labels having a certain thickness have a more pleasant and attractive appearance the thicker they are, and also, thanks to the thickness, are particularly effective at protecting the surfaces they are applied to.

Furthermore, the thickness can also be correlated to a certain softness, a softness that increases with the breadth of said thickness.

A thick, non-rigid structure of these labels is especially important when occasional physical contact with the same is envisaged.

For example, the application of labels having a certain thickness to the tank of motorcycles to distinguish and decorate the motorcycles according to the taste of the owner and especially to protect the tank from scratches and wear generated by contact with the rider is known of and widespread.

It may in fact happen that the rider's belt - or buttons or studs - abrade the tank.

It is known of to manufacture these special labels or adhesive units using various procedures and with different results, not fully satisfactory.

In fact, on the one hand the production methods may be complex and expensive, while on the other the labels or the like produced are generally not sufficiently thick or soft and pleasing to the eye.

Moreover, the shape is mostly irregular as regards thickness, or with a limited number of possible aesthetic solutions.

The known labels are structurally limited as to the possibility of effectively simulating specific or valuable materials, positively blending in with the materials they are applied to, or enhancing the appearance of objects to which the labels are applied.

In particular, in several cases, the same are structurally equipped with a transparent layer that covers them and gives them a high shine appearance, negatively highlighting the different structure and additional and extraneous nature of the label.

It should then be pointed out that the labels in question are not always satisfactory in terms of durability and strength, since in the presence of lateral or transverse forces, which are a consequence of the thickness, they may open or suffer a partial detachment of the parts composing them.

Specifically, in a first known case, it is provided that the adhesive units of the above kind have an upper visible portion defined by a cast resin.

The resins are transparent or substantially transparent and are cast on a sheet and / or an insert aesthetically characterising the label.

With this specific technique the resins must be applied with particular attention and have the edge removed after application.

One drawback of this technique is the fact that the same generates superficially shiny articles with a vitreous appearance.

In particular it is not possible to obtain complex and attractive aesthetic effects such as a simulation of carbon fibres or in any case of materials and fibres with a matt surface.

Another drawback is related to the fact that the resins allow relatively limited thicknesses, if one wishes to obtain substantially uniform thicknesses and limited smudging and waste at the edges.

Another known type of adhesive unit or label and production method thereof provides that the upper portion is made independently and in the form of a sheet not initially shaped and possibly surmounted by a thin transparent protective film. The upper portion is then cut, shaped and engaged to a lower portion at a later time.

This method makes good labels, but on the one hand of average limited thickness and on the other with a thickness varying on the same label.

In fact, depressions and contractions in the less extensive areas of the labels form, as regards their extension in a direction parallel to the surfaces to which they are applied.

In these areas, the cutting and welding operations are carried out on edges close to each other and the label is thus tensioned and depressed particularly in the areas between said close edges.

The depression also leads a local stiffening of labels and an unpleasant uneven appearance.

The presence of a transparent protective film is then negative in that it creates a shiny appearance which immediately qualifies the label as an extraneous, added accessory.

CA1173877 discloses an elongated decorative impact cushioning molding for use with vehicles comprising an extruded strip base section of pliable material having a predetermined substantially solid shaped cross section of foamed decoratively non-coloured plastic, preferably foamed PVC, with a curved outer surface and a substantially flat under surface having an adhesive mounting strip attached thereto, and a decorative and protective skin portion incorporating decorative pigmentation applied as a preformed thin skin adherent to and covering solely the whole of said outer surface of the section in protective and concealing decorative relation therewith. In this situation the technical purpose of the present invention is to devise an adhesive unit or label - and production method thereof - able to substantially overcome the drawbacks mentioned.

Within the sphere of said technical purpose one important aim of the invention is to devise an adhesive unit that is sufficiently thick or soft.

Another important aim of the invention is to devise a label which has a mainly regular and uniform shape in terms of thickness.

Yet another aim is to devise an adhesive unit or label able to effectively simulate specific or valuable materials, and therefore able to blend in with the materials which it is applied to.

A further, no less important aim of the invention is to provide a label which is reliable in terms of resistance to transverse stresses and durable over time.

Said technical purpose and specified aims are achieved by an adhesive unit for decoration and protection from wear and by a production method thereof, as claimed in the appended independent Claims.

Preferred embodiments are evident from the dependent claims.

The characteristics and advantages of the invention are clearly evident from the following detailed description of preferred embodiments thereof, with reference to the accompanying drawings, in which:
- **Fig. 1** is an example of a label of the prior art having a transparent resin on the surface;
- **Fig. 2** shows an adhesive unit or label according to the invention, in a perspective view from above; and
- **Fig. 3** is a detailed view, in cross-section and exploded, of a portion of the adhesive unit according to the invention.

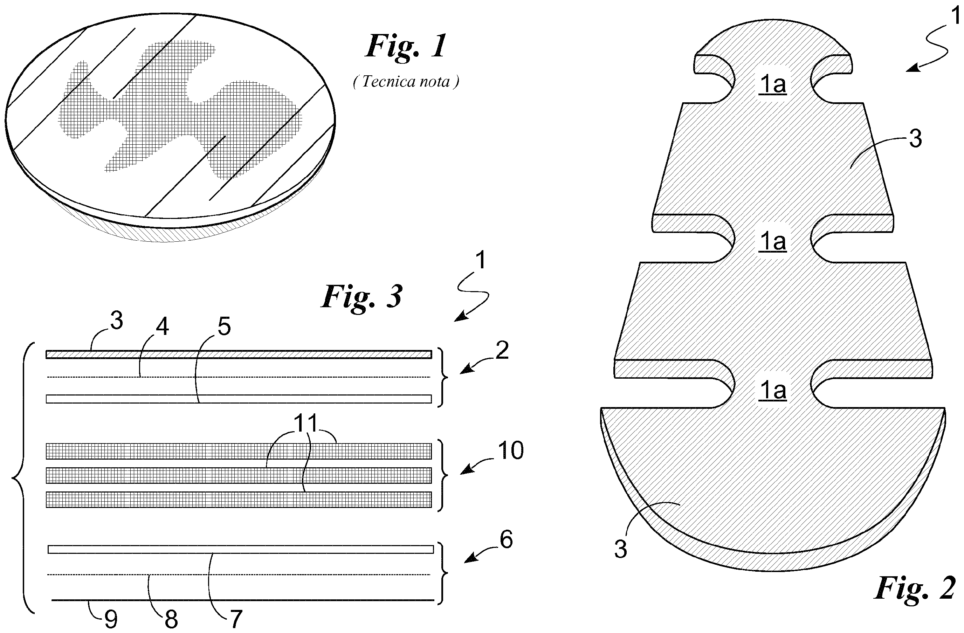

With reference to the drawings, Fig. 1 shows, merely by way of example, a label according to the method of the prior art having for example a circular shape suitable to avoid local depressions and a thick layer of resin or transparent material on the surface, such as to give a shiny and vitreous appearance.

Figures 2 and 3 instead show an adhesive unit or label **1** according to the invention as defined in claim 1 and in particular Fig. 2 shows, by way of example, a very complex shape of label and with various narrow areas **1a,** i.e. with opposite edges close together. Advantageously - as explained below - even at the narrow areas 1a depressions and irregularities of thickness are substantially avoided.

The structure devised makes it possible to do without the resin layer and thus the label is able to simulate a valuable material, so as to be applied in full view for example on a motorcycle tank, and also has a thickness and a softness able to increase its attractiveness.

In detail, in the preferred embodiment shown, the label 1 comprises, as shown in Fig. 3, various superposed and originally configured elements.

In particular, it has an upper layer **2** substantially defined by a visible leaf **3,** an upper sheet **4** placed under the visible leaf 3, and by a film of glue **5** inserted between the visible leaf 3 and the upper sheet 4.

The leaf 3 can be variously structured and for example may be defined by a laminate which imitates a valuable material.

The laminate may also be found on the market, such as the thin laminate of 3M Italia Srl called 3M DI-NOC.

The laminate in question in one embodiment effectively simulates the surface of a black carbon fibre material.

Under the leaf 3 said upper sheet 4 is provided, which is preferably made of transparent PVC, for example having a thickness of 0.5 millimetres.

The film of glue 5 interposed between the leaf 3 and the upper sheet 4 may be already provided together with the leaf 3, or applied specifically.

It has for example a thickness of 0.3 mm and is preferably made with hot acrylic glue (hot melt).

Overall the upper layer 2 is compact and durable.

The label 1, on the opposite side to the upper layer 2, has a lower layer **6** intended to be - in situ - substantially in contact with the surface to which the label is applied.

The bottom layer 6 preferably comprises a base sheet **7,** an adhesive film **8** and a removable protective element **9.**

The base sheet 7 is preferably similar to the upper sheet 4 and therefore in transparent PVC with a thickness for example of 0.5 millimetres.

The adhesive film 8 is preferably a neutral charge glue of the type suitable to engage an element in silicone material.

It is in fact provided - in a manner known per se - that before application the label 1 has the adhesive film 8 covered and protected by a removable protective element in silicone material 9, for example silicone-coated paper.

Innovatively, an intermediate layer **10** is inserted between the upper layer 2 and the lower layer 6 suitable to determine prevalently both the thickness and the hardness or softness of the label 1.

The intermediate layer 10 comprises in fact a plurality of overlapping soft laminas **11.**

Said soft laminas 11 are in synthetic foam or synthetic sponge.

In detail, the soft laminas 11 are preferably in a number comprised between two and four and are in polyurethane foam.

In addition the thicknesses of the soft laminas 11 are similar or equal to each other and constitute a total thickness preferably between about two and about five millimetres when the laminas are superposed on each other. This thickness is also that of a possible single soft lamina 11 defining the intermediate layer 10.

Different thicknesses are however possible, in particular greater thicknesses.

In a presently preferred embodiment, shown in Fig. 3, three soft laminas 11 are provided and each has a thickness of about 1.2 millimetres. The intermediate layer 10 is glue-free and in particular the laminas 11 are superposed with each other without any glue or adhesive material (hereinafter referred to solely as adhesive material). Consequently, the soft laminas 11, being devoid of adhesive material interposed between them, are not integrally constrained to each other. Innovatively, they are thus able to slide reciprocally, simulating specific and/ or highly valued materials.

Additionally or alternatively, the intermediate layer 10 may be facing the upper layers 2 and lower layers 6 without the interposition of adhesive material between each layer 2 or 6 and the intermediate layer 10 so that the laminas 11 are able to slide with respect to the upper 2 and lower 6 layers.

It is in fact provided that the intermediate layer 10 is clamped between the upper 2 and lower layers 6 directly connected to each other and connected in particular by high frequency ultrasound welding and cutting.

It is to be noted how the constraint of the upper 2 to the lower layer 6 does not substantially interfere with the reciprocal mobility of the soft laminas 11 which are thus able to reciprocally slide even after the constraint of the upper layer 2 to the lower one 6.

### NEW METHOD

The invention teaches a new method for the manufacture of an adhesive unit for decoration and protection from wear.

The method is provided for a label 1 of the type having a lower layer 6 with an adhesive film 8 and an upper layer 2 provided with a visible leaf 3.

It consists of inserting between said upper 2 and lower layers 6 an intermediate layer 10 suitable to determine prevalently both the thickness and the hardness or softness of the label 1 and defined by a plurality of soft laminas 11 in synthetic foam.

Appropriately, the soft laminas 11 are in polyurethane foam, simply stacked on top of each other, in the absence of adhesive material so as to be able to reciprocally slide innovatively simulating specific and / or highly valued materials. It is to be noted how, as a result, the intermediate layer 10 is free of adhesive material.

A particular implementation of the joining of the various elements making up the label is then provided for which allows the laminas 11 to reciprocally slide.

In fact, in the upper layer 2 and in the lower layer 6 an upper sheet 4 in PVC and a base sheet 7 also made of PVC are respectively arranged.

The upper 2 and lower layer 6 can be arranged on the intermediate layer 10 without interposing adhesive material between each layer 2 and 6 and the intermediate layer 10 so that the laminas 11 are able to slide with respect to the upper 2 and lower layers 6.

Thanks to this identity of materials an effective and rapid high-frequency ultrasonic welding is performed between the sheets 4 and 7 and consequently between the top layer 2 and the lower layer 6.

A mould known per se is used in appropriately shaped brass with sharp edges which combined with the ultrasound, welds and cuts the various superposed elements, shaping the label 1.

As is known, ultrasonic welding is particularly effective between plastic materials of the same type and is particularly suitable for PVC, while it is not suitable for polystyrene foam.

In this situation the intermediate layer 10 made of polystyrene foam is hardly affected by the welding operation and only affected by the cutting operation.

As a result, advantageously, the soft laminas 11 remain mainly free inside the sandwich defined by the upper layer 2 and the lower layer 6.

The effect of not blocking or partial blocking of the soft laminas 11 is then incremented by the presence - in the preferred embodiment - of a plurality of soft sheets 11 simply superposed on each other and therefore substantially free and sliding with each other.

The visible leaf 3 is also made of PVC in the preferred case shown, but may be in any suitable material capable of being cut in that a bonding by gluing between said visible leaf 3 and the upper sheet 4, thanks to a film of glue 5 which - as mentioned - may be provided already joined to the leaf 3, is advantageously provided for.

A similar procedure occurs for the removable protective element 9, which is joined to the base sheet 7 by an adhesive film.

The invention achieves the proposed objectives and permits important advantages.

In fact an adhesive unit or label has been devised able to efficiently simulate specific or valuable materials.

This advantage has been innovatively achieved by making an intermediate layer 10 which, comprising several soft laminas 11 not rigidly constrained to one another by adhesive material or otherwise, is able to exploit the mutual sliding between the soft laminas 11 to simulate the deformations of a label composed of a valuable material.

Moreover, the mobility of the soft laminas 11 can be increased by arranging the layers 2 and 6 on the intermediate layer 10 without interposing adhesive material. The label 1 is also able to blend in with the materials which it is applied to and also, if necessary, may be provided with a similarly matt finish.

For example, it can be inserted in full view for example on the tank of a motorcycle and blend in with the same to avoid scratches and abrasions.

The label produced is then reliable in terms of resistance to stress, to transverse tensions and to opening thanks to its manufacturing process.

The fact that the label is suitable to present an adequate thickness, soft and substantially regular and uniform as to thickness, even in cases of a highly irregular shape, is also fundamental.

This is thanks to its original structure which provides an intermediate layer sensitive to cutting but insensitive to ultrasonic welding at high frequency and therefore substantially free and preferably formed of a plurality of soft laminas which can slide in relation to one another, not being mutually engaged.

In practice, even in narrow areas 1 a of the adhesive unit or label 1 depressions and irregularities of thickness are substantially avoided.

Variations may be made to the invention without departing from the scope of the inventive concept defined in the independent claims. All details may be replaced with equivalent elements and the materials, shapes and dimensions may be any within the scope of protection defined by the independent claims.

## Claims

1. Adhesive unit (1) for decoration and protection from wear, of the type having a lower layer (6) comprising at least one adhesive film (8) and an upper layer (2) connected to said lower layer (6) and comprising at least one visible leaf (3), **characterised in that** between said upper layer (2) and said lower layer (6) an intermediate layer (10) is positioned comprising a plurality of soft laminas (11) in synthetic foam without the interposition of adhesive material between said soft laminas (11) which are thus able to reciprocally slide.

2. Adhesive unit (1) according to the preceding claim, wherein said intermediate layer (10) comprises three soft laminas (11), and wherein said foam is polyurethane foam.

3. Adhesive unit (1) according to one or more of the preceding claims, wherein said upper layer (2) and said lower layer (6) are arranged on said intermediate layer (10) without the interposition of adhesive material between each of said layers (2, 6) and said intermediate layer (10).

4. Adhesive unit (1) according to one or more of the preceding claims, wherein said upper layer (2) comprises said visible leaf (3), an upper sheet (4) and a film of glue (5) inserted between said leaf (3) and said upper sheet (4).

5. Adhesive unit (1) according to one or more of the preceding claims, wherein said lower layer (6) comprises a base sheet (7) supporting said adhesive film (8), and wherein said upper sheet (4) and said base sheet (7) are made of polyvinyl chloride (PVC) and are joined together in situ.

6. Adhesive unit according to one or more of the preceding claims, wherein said film of glue (5) between said visible leaf (3) and said upper sheet (4) is hot acrylic glue, and wherein said adhesive film (8) in said lower layer (6) is neutral charge glue, suitable to engage a removable protection element (9) in silicone material.

7. Adhesive unit according to one or more of the preceding claims, wherein said visible leaf (3) is an imitation carbon fibre laminate.

8. Production method of an adhesive unit (1) for decoration and protection from wear, of the type having a lower layer (6) provided with an adhesive film (8) and an upper layer (2) comprising a visible leaf (3) **characterised in that** it consists of inserting between said upper layer (2) and said lower layer (3) an intermediate layer (10) comprising a plurality of soft laminas (11) in synthetic foam without the interposition of adhesive material between said soft laminas (11) which are thus able to reciprocally slide.

9. Method according to the preceding claim, wherein said upper layer (2) and said lower layer (6) are arranged on said intermediate layer (10) without the interposition of adhesive material between each of said layers (2, 6) and said intermediate layer (10).

10. Method according to one or more of the preceding claims, wherein in said upper layer (2) said visible leaf (3) is glued to an upper sheet (4) made of polyvinyl chloride (PVC), wherein in said lower layer (6) a base sheet (7) is prepared in polyvinyl chloride (PVC) engaged by said adhesive film (8), and wherein said upper sheet (2) and said base sheet (7) are joined together by high frequency ultrasonic welding.

## Patentansprüche

1. Klebstoffeinheit (1) zur Dekoration und zum Schutz vor Verschleiß des Typs mit einer unteren Schicht (6), die mindestens eine Klebefolie (8) umfasst, und einer oberen Schicht (2), die mit der genannten unteren Schicht (6) verbunden ist und mindestens eine sichtbare Lage (3) umfasst, **dadurch gekennzeichnet, dass** zwischen der genannten oberen Schicht (2) und der genannten unteren Schicht (6) eine Zwischenschicht (10) angeordnet ist, die eine Vielzahl an weichen Folien (11) aus Synthetikschaum ohne Klebematerial zwischen den genannten weichen Folien (11) umfasst, die so in der Lage sind, gegeneinander zu gleiten.

2. Klebstoffeinheit (1) nach dem vorangegangenen Anspruch, bei der die genannte Zwischenschicht (10) drei weiche Folien (11) umfasst und der genannte Synthetikschaum aus Polyurethanschaumstoff besteht.

3. Klebstoffeinheit (1) nach einem oder mehreren der vorangegangenen Ansprüche, bei der die genannte obere Schicht (2) und die genannte untere Schicht (6) auf der genannten Zwischenschicht (10) ohne Klebematerial zwischen jeder der genannten Schichten (2, 6) und der genannten Zwischenschicht (10) angeordnet sind.

4. Klebstoffeinheit (1) nach einem oder mehreren der vorangegangenen Ansprüche, bei der die obere Schicht (2) die genannte sichtbare Lage (3), ein oberes Blatt (4) und einen Klebefilm (5) zwischen der genannten Lage (3) und dem genannten oberen Blatt (4) umfasst.

5. Klebstoffeinheit (1) nach einem oder mehreren der vorangegangenen Ansprüche, bei der die genannte untere Schicht (6) ein die genannte Klebefolie (8) tragendes Basisblatt (7) umfasst und bei der das genannte obere Blatt (4) und das genannte Basisblatt (7) aus Polyvinylchlorid (PVC) bestehen und bei der Anbringung miteinander verbunden sind.

6. Klebstoffeinheit nach einem oder mehreren der vorangegangenen Ansprüche, bei der der genannte Klebefilm (5) zwischen der genannten sichtbaren Lage (3) und dem genannten oberen Blatt (4) aus Acryl-Schmelzklebstoff besteht und bei der die genannte Klebefolie (8) in der genannten unteren Schicht (6) aus einem Klebstoff mit neutraler Ladung besteht, der geeignet ist, ein entfernbares Schutzelement (9) aus Silikonwerkstoff zu befestigen.

7. Klebstoffeinheit (1) nach einem oder mehreren der vorangegangenen Ansprüche, bei der es sich bei der genannten sichtbaren Lage (3) um ein der Carbonfaser nachempfundenes Laminat handelt.

8. Herstellungsverfahren für eine Klebstoffeinheit (1) zur Dekoration und zum Schutz vor Verschleiß des Typs mit einer unteren Schicht (6), die mit einer Klebefolie (8) und einer oberen Schicht (2) ausgestattet ist und eine sichtbare Lage (3) umfasst, **dadurch gekennzeichnet, dass** zwischen der genannten oberen Schicht (2) und der genannten unteren Schicht (3) eine Zwischenschicht (10) eingefügt wird, die eine Vielzahl an weichen Folien (11) aus Synthetikschaum ohne Klebematerial zwischen den genannten weichen Folien (11) umfasst, die so in der Lage sind, gegeneinander zu gleiten.

9. Herstellungsverfahren nach dem vorangegangenen Anspruch, bei dem die genannte obere Schicht (2) und die genannte untere Schicht (6) auf der genannten Zwischenschicht (10) ohne Klebematerial zwischen jeder der genannten Schichten (2, 6) und der genannten Zwischenschicht (10) angeordnet sind.

10. Herstellungsverfahren nach einem oder mehreren der vorangegangenen Ansprüche, bei dem in der genannten oberen Schicht (2) die genannte sichtbare Lage (3) an einem oberen Blatt (4) aus Polyvinylchlorid (PVC) verklebt wird, bei dem in der genannten unteren Schicht (6) ein Basisblatt (7) aus Polyvinylchlorid (PVC) angeordnet wird, das von der genannten Klebefolie (8) befestigt wird und bei dem das genannte obere Blatt (2) und das genannte Basisblatt (7) miteinander durch Hochfrequenz-Ultraschallschweißung verbunden werden.

## Revendications

1. Unité adhésive (1) pour décoration et protection contre l'usure, du type ayant une couche inférieure (6) comportant au moins une pellicule adhésive (8) et une couche supérieure (2) connectée à ladite couche inférieure (6) et comportant au moins un bord (3) à vue, **caractérisée en ce qu'**entre ladite couche supérieure (2) et ladite couche inférieure (6) est placée une couche intermédiaire (10) comportant une pluralité de feuillets doux (11) en mousse synthétique sans l'interposition de matière adhésive entre lesdits feuillets doux (11) qui sont ainsi en mesure de coulisser réciproquement.

2. Unité adhésive (1) selon la revendication précédente, dans laquelle ladite couche intermédiaire (10) comporte trois feuillets doux (11) et dans laquelle ladite mousse synthétique est polyuréthane expansé.

3. Unité adhésive (1) selon l'une ou plusieurs des revendications précédentes, dans laquelle ladite couche supérieure (2) et ladite couche inférieure (6) sont placées sur ladite couche intermédiaire (10) sans l'interposition de matière adhésive entre chacune desdites couches (2, 6) et ladite couche intermédiaire (10).

4. Unité adhésive (1) selon l'une ou plusieurs des revendications précédentes, dans laquelle ladite couche supérieure (2) comporte ledit bord (3) à vue, une feuille supérieure (4) et un film de colle (5) étant inséré entre ledit bord (3) et ladite feuille supérieure (4).

5. Unité adhésive (1) selon l'une ou plusieurs des revendications précédentes, dans laquelle ladite couche inférieure (6) comporte une feuille de base (7) soutenant ladite pellicule adhésive (8), et dans laquelle ladite feuille supérieure (4) et ladite feuille de base (7) sont en Polychlorure de vinyle (PVC) et, une fois installées, sont unies entre elles.

6. Unité adhésive (1) selon l'une ou plusieurs des revendications précédentes, dans laquelle ledit film de colle (5) entre ledit bord (3) à vue et ladite feuille supérieure (4) est en colle acrylique à chaud, et dans laquelle ladite pellicule adhésive (8) dans ladite couche inférieure (6) est en colle à charge neutre, apte à engager un élément de protection amovible (9) en matière de silicone.

7. Unité adhésive (1) selon l'une ou plusieurs des revendications précédentes, dans laquelle ledit bord (3) à vue est un laminé imitant la fibre de carbone.

8. Procédé pour la production d'une unité adhésive (1) pour décoration et protection contre l'usure, du type présentant une couche inférieure (6) munie d'une pellicule adhésive (8) et une couche supérieure (2) comportant un bord (3) à vue, **caractérisé en ce qu'**il consiste à insérer entre ladite couche supérieure (2) et ladite couche inférieure (3) une couche intermédiaire (10) comportant une pluralité de feuillets doux (11) en mousse synthétique sans interposition de matière adhésive entre lesdits feuillets doux (11) qui sont ainsi en mesure de coulisser réciproquement.

9. Procédé selon la revendication précédente, dans lequel ladite couche supérieure (2) et ladite couche inférieure (6) sont placées sur ladite couche intermédiaire (10) sans interposition de matière adhésive entre chacune desdites couches (2, 6) et ladite couche intermédiaire (10).

10. Procédé selon l'une ou plusieurs des revendications précédentes, dans lequel dans ladite couche supérieure (2) ledit bord (3) à vue est collé à une feuille supérieure (4) en Polychlorure de vinyle (PVC), dans lequel dans ladite couche inférieure (6) est placée une feuille de base (7) en Polychlorure de vinyle (PVC) engagée par ladite pellicule adhésive (8) et dans lequel ladite feuille supérieure (2) et ladite feuille de base (7) sont unies entre elles par soudure à ultrasons à haute fréquence.
